# EUROPEAN PATENT SPECIFICATION

(11) **EP 1 736 837 B1**
(45) Date of publication and mention of the grant of the patent: **02.05.2012**
(21) Application number: 05720873.8
(22) Date of filing: 16.03.2005
(51) Int. Cl.: B44C 1/17, G03H 1/18, B41M 5/26

(54) **METHOD OF TRANSFERRING HOLOGRAM OR DIFFRACTION GRATING LAID ON THERMAL TRANSFER SHEET**
VERFAHREN ZUM TRANSFERIEREN EINES HOLOGRAMMS ODER BEUGUNGSGITTERS, DAS AUF EIN THERMISCHES TRANSFERBLATT AUFGEBRACHT IST
PROCEDE DE TRANSFERT D'HOLOGRAMME OU DE RESEAU DE DIFFRACTION DISPOSE SUR UNE FEUILLE DE TRANSFERT THERMIQUE

(30) Priority: 17.03.2004 JP 2004075863
(43) Date of publication of application: 27.12.2006
(73) Proprietor: DAI NIPPON PRINTING CO., LTD., Tokyo 162-8001 (JP)
(72) Inventor: MIZUKAMI, Fumihiko, Dai Nippon Printing Co., Ltd., Shinjuku-ku, Tokyo 1628001 (JP); AOYAGI, Makoto, c/o Dai Nippon Printing Co., Ltd., Shinjuku-ku, Tokyo 1628001 (JP)
(74) Representative: Smart, Peter John
(86) International application number: PCT/JP2005/004619
(87) International publication number: WO 2005/088408

(56) References cited:
- JP-A- 8 258 437
- JP-A- 01 283 583

## Description

### TECHNICAL FIELD

The present invention relates to a transferring method for transferring a hologram or a diffraction grating laminated in a thermal transfer sheet.

### BACKGROUND ART

A method for printing a hologram or a diffraction grating (hereinafter referred to as "hologram and the like" in the case where it is not needed to discriminate between a hologram and a diffraction grating) by a thermal transfer sheet where a hologram is laminated (for example, see a patent document 1 and a patent document 2). In the disclosed invention, on-demand information such as item numbers and names can be added by printing appropriate patterns. Therefore, the disclosed invention enables to discriminate each article in comparison with the effect of anticounterfeit by using only hologram patterns which is fixed information.

Patent Document 1: Japanese Patent Laid-Open No.63137287
Patent Document 2: Japanese Patent Laid-Open No.01283583
JP-A-8258437 describes a method of preventing a thermal head adhering to the backing sheet of a thermal transfer sheet during thermal transfer by providing a relief pattern, which may be in the form of a hologram, on the backing sheet on the side contacting the thermal head.

### DISCLOSURE OF THE INVENTION

### Problem to be solved by the Invention

However, we hardly see the articles to which the technology is actually applied in a market. One reason why the commercialization has not been promoted is thought that in the case of printing a hologram and the like by thermal transfer with a thermal head, the change of image is big between before and after the transfer, that makes the effects of hologram disturbed, in comparison with transfer and formation by methods using rolls and molds.

Therefore, the present invention provides a transferring method for transferring a hologram and like with stable quality including on-demand information by using a thermal transfer sheet where the hologram and the like is laminated.

### Means for Solving the Problem

The above problems are solved by a transferring method of the present invention, the transferring method for transferring a hologram or diffraction grating, using a thermal transfer sheet in which a hologram or a diffraction grating is laminated on a base material film, and wherein information is recorded which provides enhanced optical effects in the hologram or diffraction grating with respect to a predetermined direction, and wherein the hologram or diffraction grating is transferred by heating carried out by a heat source of minute area unit, the heating being carried out sequentially in the same direction as the direction in which the information provides enhanced optical effects.

The inventor of the present invention has disclosed the following; in the case where a hologram and the like is transferred by a thermal head and the like, where an area unit of heat energy applied from a heat element as a heat source is small, the energy is applied sequentially. Thereby, convexoconcave ranging from 0.5µm to a few µm occurs for each formed unit. The interference effects, which are expected on condition that an interference pattern or a diffraction grating is formed on a flat surface without convexoconcave, are not obtained. Moreover, the inventor has noted that with respect to a direction in which the formed unit is formed sequentially, the convexoconcave occurring for each formed unit does not almost exist and the formed unit is almost evenness, and thereby the interference effects are not almost disturbed.

According to the present invention, the hologram and the like is transferred thermally so that the direction of heating sequentially by the heat source and the direction of recorded information for enhancing the optical effects of hologram and the like coincide with each other, and thereby, the recorded information is recorded almost evenly and the optical effects of the recorded information is not disturbed.

The heat source may be a heat generation element of a thermal head, and may be a laser. The hologram may be a rainbow hologram, and may be a computer hologram in which an interference pattern is formed in an interference pattern forming range constructing a whole of the hologram, the interference pattern being composed of an element range as a unit obtained by slicing the interference pattern forming area in a horizontal direction.

"a formed unit" corresponds to an area unit of heat energy applied from a heat source. For example, in the case where the heat source is a heat generation element, "a formed unit" is a range where one heat generation element can heat, and in the case where the heat source is a laser, "a formed unit" is an irradiation range obtained by one-time irradiation of the laser. "A direction of recorded information for enhancing optical effects" is, for example, a horizontal direction, in the case of hologram forming a hologram image with respect to only horizontal parallax, where the interference pattern is recorded, the interference pattern being formed based on object wave correlating with only a horizontal direction while ignoring object wave diffusing in a vertical direction. Consequently, in a rainbow hologram and a computer hologram where the parallax with respect to a vertical direction is not cared, the "direction of recorded information" indicates a horizontal direction. "A minute area unit" is small sufficiently in comparison with the area of hologram and the like where the formed unit is transferred.

### EFFECT OF THE INVENTION

As described above, according to the present invention, a direction of heating sequentially by a heat source of a minute area unit and a direction of recorded information for enhancing optical effects of a hologram or a diffraction grating coincide with each other. Thereby, the present invention provides a transferring method for transferring a hologram and like with stable quality including on-demand information by using a thermal transfer sheet where the hologram and the like is laminated.

### BRIEF DESCRIPTION OF THE DRAWINGS

FIG.1 is a view showing an example of a thermal transfer sheet used in the present embodiment;
FIG.2 is a view showing an expanded view of a part of the interference pattern of computer hologram formed in the transfer layer shown in FIG. 1;
FIG.3A is a view showing the state of heating a thermal transfer sheet shown in FIG. 1 by a thermal head;
FIG. 3B is a view showing the state of heating by heat generation elements shown in FIG.3A.
FIG.4 is a view showing the state of heating the thermal transfer sheet FIG. 1 by a laser.
FIG.5 is a view showing the state of transferring diffraction gratings representing a color image.

### BEST MODE FOR CARRYING OUT THE INVENTION

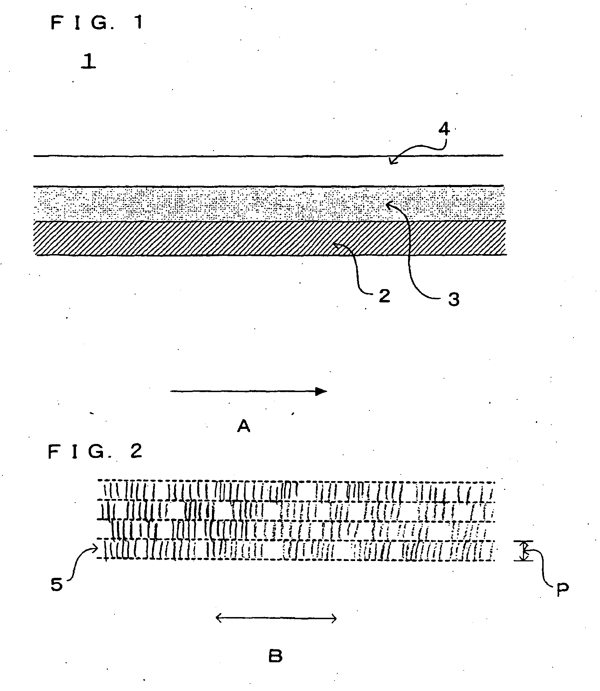

FIG.1 is a view showing an example of a thermal transfer sheet to realize the present invention. In the thermal transfer sheet 1, a transfer layer 3 and an adhesion layer 4 are laminated on a base material film 2. In the transfer layer 3, an interference pattern of computer hologram is formed. In the interference pattern, information with respect to optical interference is recorded so that characters or images can be represented by reproducing light when the interference pattern is transferred to a transfer object. The details of the interference pattern of computer hologram formed in the transfer layer 3 will be described later. When the transfer object is contacted with a side of the adhesion layer 4 to apply heat energy by a predetermined heat source from a side of the base material film sequentially in the direction A, the adhesion layer 4 adheres to the transfer object and the transfer layer 3 is separated from the base material film 2 to transfer the computer hologram formed in the transfer layer 3 to the transfer object. Hereinafter, the direction A is referred to as the heating direction A.

The interference pattern of the computer hologram formed in the transfer layer 3 will be described by using FIG. 2 which is a expanded view of a part of the computer hologram. The interference pattern of computer hologram of the present embodiment is composed of a band-shaped element range 5. The width of each element range 5 is obtained by slicing an interference pattern forming range in the horizontal direction B by a slice-width P. The slice-width P ranges from 10µm to 100µm. Parallax information with respect to the horizontal direction B is recorded in the interference pattern of each element range 5.

Thereby, the computer hologram of the present embodiment represents a hologram by the parallax information with respect to only the horizontal direction B. Namely, the direction of recorded information for enhancing the optical effects of computer hologram is the horizontal direction B. Such computer hologram can be obtained by a well-known method for forming a computer hologram. Hereinafter, the horizontal direction B is referred to as the interference pattern direction B. The computer hologram is formed in the transfer layer 3 so that the heating direction A of the thermal transfer sheet 1 and the interference pattern direction B coincide with each other.

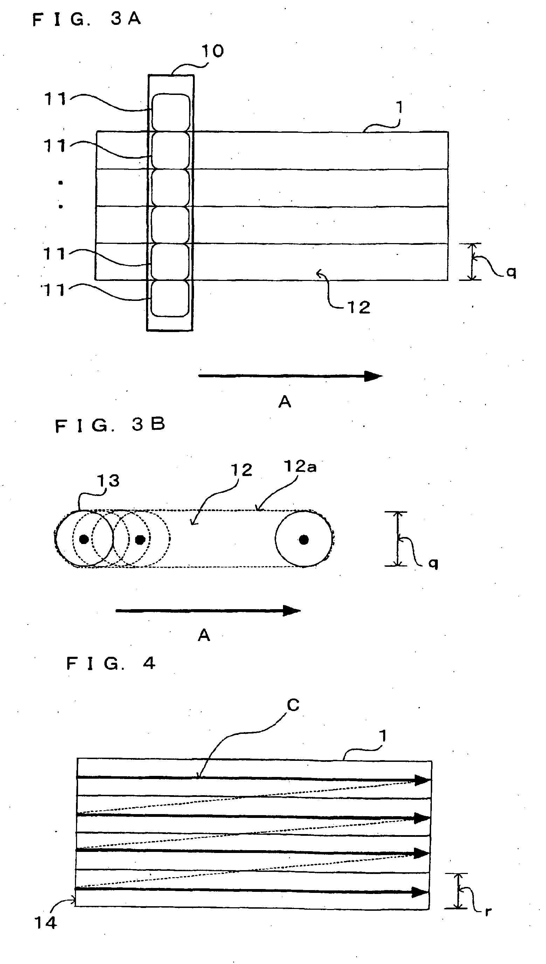

Next, the method for transferring the transfer layer 3 and the like in the thermal transfer sheet 1 to the transfer object with a thermal head will be described. As shown in FIG. 3A, the thermal head 10 of the present embodiment is constructed by aligning a plurality of heat generation elements 11...11 each of which is a minute area unit as a heat source. The thermal transfer sheet 1 is heated in the heating direction A sequentially, by moving the thermal head 10 in the heating direction A, while the thermal head 10 contacting with a side of the basic material film 2 in the thermal transfer sheet1. As described above, the interference pattern direction B of the computer hologram forming the transfer layer 3, that is, the direction of recorded information for enhancing optical effects coincides with the heating direction A. Consequently, the transfer layer 3 is heated sequentially in the direction of recorded information.

When the thermal head 10 moves in the heating direction A, a plurality of transfer units 12 each of which has a transfer width q are formed. Each of the transfer units 12 corresponds to each of the heat generation elements 11. The transfer unit 12 will be described by using FIG. 3B showing the state of heating by the heat generation element 11. The heated range 13 to be heated by the heat generation element 11 is almost in the shape of circle. As the heat generation element 11 moves in the heating direction A, the heated range 13 also moves in the heating direction A. Thereby, the transfer unit 12 which is almost in the band of shape having a drawing width q is formed for each heat generation element 11.

The drawing width q is a value proposal to the heated range 13 of the heat generation element 11 and ranges from 50µm to several hundred µm. By this thermal transferring method, problematic convexoconcave hardly occurs in the transfer unit 12, but the problematic convexoconcave is likely to occur between the adjacent transfer units 12, that is, on a side 12a parallel with the heating direction A. However, the convexoconcave which occurs between the transfer units 12 does not cause the optical effects of the interference pattern of computer hologram to be disturbed, because the convexoconcave occurs in the same direction as the heating direction A, that is, the interference pattern direction B.

The present invention is not limited to the above described embodiment, but may be executed in various modes. For example, a laser instead of the thermal head may be used as a heating method. In this case, in the state that while the transfer object being contacted with a side of adhesion layer 4 in the thermal transfer sheet 1, the laser gets irradiated to a side of base material film 2 to move in the direction C. Hereinafter, the direction C is referred to as the irradiation direction C. The irradiation direction C is a direction for heating. Therefore, as shown in FIG.4, the laser is irradiated so that the irradiation direction C and the interference pattern direction B coincide with each other. In the case of using the laser as a heat source, the convexoconcave occurs between the transfer units 14 each of which is band-shaped with the drawing width r ranging from 10µm to 100µm. As the direction of the convexoconcave is the same as the interference pattern direction B, the optical effects of transferred hologram are not disturbed.

Moreover, the hologram formed in the transfer layer 3 may be a rainbow hologram. In this case, the transfer layer 3 should be laminated in the thermal transfer sheet 1 so that the direction in which the parallax information is recorded as an interference pattern coincides with the interference pattern direction B, and the thermal transfer sheet should be heated in the heating direction A or C by the thermal head or the laser as the described case of the computer hologram. Moreover, a releasing layer may be laminated between the transfer layer 3 and the base material film 2 to enhance a releasing property caused by heating. Another layer where other necessary information or temporary information is printed may be additionally laminated on the base material film 2. In the case where the laser is used as the heat source, a photothermal conversion layer should be laminated between the base material film and the transfer layer.

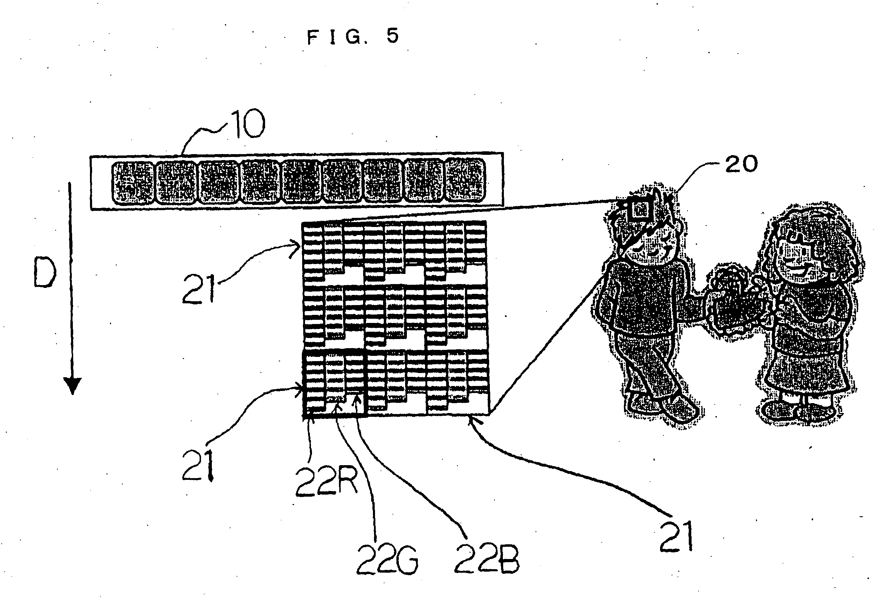

Moreover, not only the interference pattern of hologram but also a diffraction grating may be formed in the transfer layer 3. For example, in the case where a color image 20 shown in FIG. 5 is represented by diffraction gratings, the color is represented for each dot by an area ratio of diffraction grating areas 22R, 22G, and 22B each of which represents RGB. In this case, "a direction of recorded information for enhancing optical effects" is the vertical direction to the color image 20, that is the direction D in which the diffraction gratings are recorded. Accordingly, in the case where the thermal transfer sheet 1 is heated by the thermal head 10, the thermal head 10 should be moved in the same direction as the direction D to make the heating direction coincide with the direction D.

## Claims

1. A transferring method using a thermal transfer sheet (1) in which a hologram or a diffraction grating (3) is laminated on a base material film (2), wherein information is recorded which provides enhanced optical effects in the hologram or diffraction grating (3) with respect to a predetermined direction , and wherein
the hologram or diffraction grating (3) is transferred by heating carried out by a heat source of a minute area unit, the heating being carried out sequentially in the same direction as the direction in which the information provides enhanced optical effects.

2. The transferring method according to claim 1, wherein
the heat source is a heat generation element of a thermal head.

3. The transferring method according to claim 1, wherein
the heat source is a laser.

4. The transferring method according to any one of claims 1 to 3, wherein
the hologram is a rainbow hologram.

5. The transferring method according to any one of claims 1 to 3, wherein
the hologram is a computer hologram in which a interference pattern is formed in an interference pattern forming range constructing a whole of the hologram, the interference pattern being composed of an element range as a unit obtained by slicing the interference pattern forming area in a horizontal direction.

## Patentansprüche

1. Transferverfahren unter Verwendung eines Thermotransferblatts (1), bei dem ein Hologramm oder ein Beugungsgitter (3) auf eine Folie (2) eines Trägermaterials auflaminiert ist, in der Informationen aufgezeichnet sind, die in dem Hologramm oder dem Beugegitter (3) verstärkte optische Effekte im Hinblick auf eine vorgegebene Richtung zum Tragen kommen lassen, und wobei
das Hologramm oder das Beugegitter (3) durch Erwärmung übertragen ist, die durch eine Wärmequelle einer winzigen Flächeneinheit erfolgt, wobei die Erwärmung sequenziell in derselben Richtung erfolgt, in der die Informationen verstärkte optische Effekte zum Tragen kommen lassen.

2. Transferverfahren nach Anspruch 1, wobei die Wärmequelle eine Wärmeerzeugungseinheit eines Thermokopfes ist.

3. Transferverfahren nach Anspruch 1, wobei die Wärmequelle ein Laser ist.

4. Transferverfahren nach einem der Ansprüche 1 bis 3, wobei das Hologramm ein Regenbogenhologramm ist.

5. Transferverfahren nach einem der Ansprüche 1 bis 3, wobei das Hologramm ein Computer-Hologramm ist, bei dem ein Interferenzmuster in einem Referenzmusterausbildungsbereich ausgebildet ist, der das Hologramm zur Gänze gestaltet, wobei das Interferenzmuster aus einem Elementbereich als Einheit zusammengesetzt ist, welche erhalten wird, indem der Interferenzmusterausbildungsbereich in horizontaler Richtung mit Schlitzen versehen wird.

## Revendications

1. Procédé de transfert utilisant une feuille de transfert thermique (1) dans laquelle un hologramme ou un réseau de diffraction (3) est stratifié sur un film de matériau de base (2), dans lequel il est enregistré des informations qui fournissent des effets optiques améliorés dans l'hologramme ou le réseau de diffraction (3) par rapport à une direction prédéterminée, et dans lequel
l'hologramme ou le réseau de diffraction (3) est transféré par chauffage effectué par une source de chaleur d'une unité de surface minuscule, le chauffage étant effectuée séquentiellement dans la même direction que la direction dans laquelle les informations fournissent des effets optiques améliorés.

2. Procédé de transfert selon la revendication 1, dans lequel
la source de chaleur est un élément de génération de chaleur d'une tête thermique.

3. Procédé de transfert selon la revendication 1, dans lequel
la source de chaleur est un laser.

4. Procédé de transfert selon l'une quelconque des revendications 1 à 3, dans lequel
l'hologramme est un hologramme en arc-en-ciel.

5. Procédé de transfert selon l'une quelconque des revendications 1 à 3, dans lequel
l'hologramme est un hologramme informatique dans lequel il est formé un motif d'interférence dans une plage de formation de motif d'interférence construisant l'intégralité de l'hologramme, le motif d'interférence étant composé d'une plage d'élément en tant qu'unité obtenue en découpant la zone de formation de motif d'interférence dans une direction horizontale.
